# EUROPEAN PATENT SPECIFICATION

(11) **EP 3 634 884 B1**
(45) Date of publication and mention of the grant of the patent: **24.07.2024**
(21) Application number: 18802740.3
(22) Date of filing: 18.05.2018
(51) Int. Cl.: G06Q 10/087, G07G 1/00, G07F 11/62, G07F 17/00, G07F 17/12, G07F 17/40

(54) **ORDER FULFILLMENT SYSTEM AND METHOD WITH ITEM SENSOR**
AUFTRAGSABWICKLUNGSSYSTEM UND VERFAHREN MIT ARTIKELSENSOR
SYSTÈME ET PROCÉDÉ D'EXÉCUTION DE COMMANDE AVEC UN CAPTEUR D'ARTICLE

(30) Priority: 19.05.2017 US 201762508738 P
(43) Date of publication of application: 15.04.2020
(73) Proprietor: Apex Industrial Technologies LLC, Mason, OH 45040 (US)
(72) Inventor: ALDEN, Richard, Mathias, Loveland, OH 45140 (US); SAVAGE, Benjamin, V., Loveland, OH 45140 (US); SAVAGE, Kent, V., Mason, OH 45040 (US)
(74) Representative: Latham, Stuart Alexander
(86) International application number: PCT/US2018/033361
(87) International publication number: WO 2018/213689

(56) References cited:
- CN-A- 103 735 059
- US-A- 5 014 875
- US-A- 5 303 844
- US-A1- 2006 102 646
- US-A1- 2006 226 169
- US-A1- 2009 112 361
- US-A1- 2009 248 876
- US-A1- 2010 301 716
- US-A1- 2016 193 094
- US-A1- 2016 200 517
- US-B2- 7 077 286
- No further relevant documents disclosed

## Description

This application claims priority to U.S. Provisional Patent Application Serial No. 62/508,738, filed on May 19, 2017 and entitled ORDER FULFILLMENT SYSTEM AND METHOD WITH ITEM SENSOR.

This application is directed to an order fulfillment system, and more particularly, to an order fulfillment system which can track the status of its contents.

### BACKGROUND

Sellers of various goods, such as retail operations, grocery stores, restaurant/food service and other sales and/or delivery operations are increasing utilizing self-service pick-up options for goods. The orders for such goods can in some cases be placed remotely and by any of a variety of methods, such as call-ahead phone calls, internet/web site ordering and/or mobile device ordering. Some retailers/operations accommodate pre-payment such that the customer need only provide proof of purchase before taking possession of the purchased items. Such pre-payment can avoid the need for on-site interaction with, or monetary exchange with, store personnel.

Efficiently fulfilling these remotely-initiated orders for in-store pickup can create a logistical challenge. In some existing settings, remote-order customers must wait in line with other customers upon arrival at the store, despite the fact that their orders are already prepared and ready for pick-up, and in some cases are already paid for. In addition, when a remote-order customer reaches the point of sale workstation in many existing scenarios, the cashier may be required to step away from his/her workstation to retrieve the order and confirm payment status before locating and delivering the appropriate product to the customer. This increases wait time for all customers. In some cases, businesses may increase staffing to provide fulfilment of such remote orders with dedicated personnel, which can impose a burden on store resources.

Prior art document US 2016/200517 A1 relates to an order fulfillment system including a frame defining a passageway and a tray positioned in the passageway. Prior art document US 2010/301716 A1 relates to a storage and dispensing cabinet having a housing with a plurality of compartments and each compartment including a door for controlling access thereto. Prior art document CN 103 735 059 A relates to a drawer capable of preventing children from opening it. Prior art document US 2006/102646 A1 relates to a dispensing device and method including a housing defining an opening. Prior art document US 2006/226169 A1 relates to an apparatus for dispensing lids and other articles such as plates, condiments, etc. comprising a threaded shaft powered by an electric motor which is used to raise a stack of items from the bottom of a storage hopper.

### SUMMARY

The invention is as defined in claim 1.

### BRIEF DESCRIPTION OF THE DRAWINGS

Fig. 1 is a front perspective view of one example, not according to the claimed invention, of an order fulfillment system;
Fig. 2 is a front view of the system of Fig. 1;
Fig. 3 is a cross section of a portion of the system of Figs. 1 and 2, taken along line 3-3 of Fig. 2;
Fig. 4 is a cross section of a portion of the system of Figs. 1 and 2, taken along line 4-4 of Fig. 2;
Fig. 5 is a front perspective view of a tray of the system of Fig. 1;
Fig. 6 is a side view of the tray of Fig. 5;
Fig. 7 is a bottom view of a roller assembly of the system of Fig. 1;
Fig. 8 is a side view of a solenoid which can be utilized in the system of Fig. 1;
Fig. 9 is a side view of a latch assembly of the system of Fig. 1;
Fig. 10 is a side cutaway view of the interior of an electronics enclosure of the system of Fig. 1;
Fig. 11 is a top view of the system of Fig. 1;
Fig. 12 is a side view of the system of Fig. 1;
Fig. 13 is a schematic representation of a retail setting in which the system of Fig. 1 may be utilized;
Fig. 14 is a front perspective view of a module of the claimed invention of an order fulfillment system;
Fig. 15 is a front perspective view of the module of Fig. 14, with the door slightly open;
Fig. 16 is a side view of the module of Fig. 14, with the tray and sensor system shown in hidden lines;
Fig. 17 is a detail view of the area indicated in Fig. 16;
Fig. 18 is a side view of the module of Fig. 16, with an item positioned on the tray and the tray in its extended position;
Fig. 19 is a detail view of the area indicated in Fig. 18; and
Fig. 20 is a front perspective view of a plurality of modules coupled together.

### DETAILED DESCRIPTION

The order fulfillment system 10 disclosed herein can be utilized to enable or facilitate the transfer of any of a variety of products, items or the like. The system can be utilized in conjunction with nearly any type of product, item or the like so long as such product, item or the like can be physically accommodated in the system 10, including but not limited to, food, beverages, groceries, pharmaceuticals, retail merchandise, parts, components, work pieces, hardware, and the like. The items or products forming part of or used in conjunction with the system 10 can in some cases take the form of or include a consumable item and/or associated packaging. However the product can also or instead take the form of various items or products packaged or bundled together, such as numerous items in a box, bag, carrier or the like. Moreover, the product could in one case take the form of a token that entitles the bearer to a product or service, such as an empty soda or soft drink cup that can be filled by the bearer/customer.

In one case a product, item or the like is transferred from or between two users or parties, termed a "stocking" party and a "retrieving" party herein. In many cases title/ownership of the product, item or the like is being, has been or will be transferred from the stocking party to the retrieving party, such as in a sale transaction. However, the system may also be used in some cases in a lending or leasing arrangement and/or to return a product to the stocking party in a return transaction. In other cases title may not necessary transfer, for example when items are dispensed by a company or facility for use by its employees or other personnel.

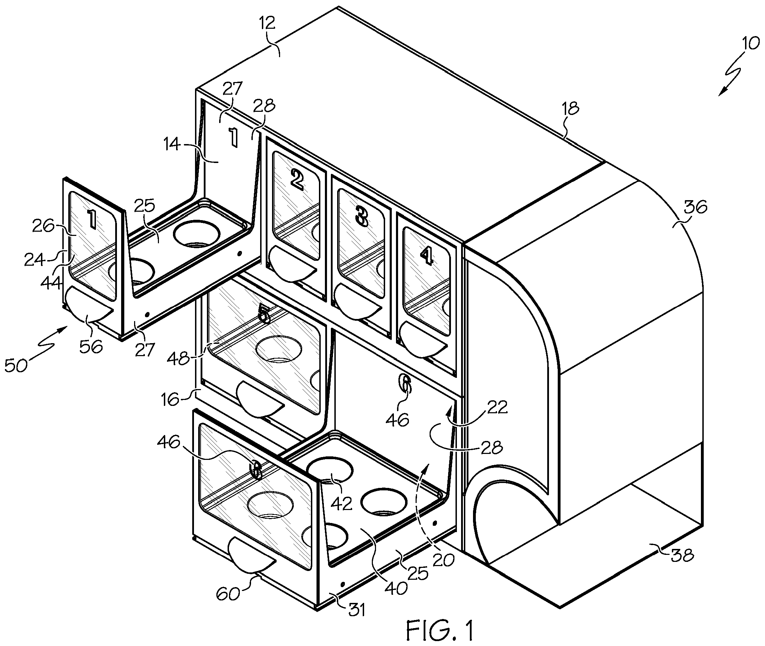

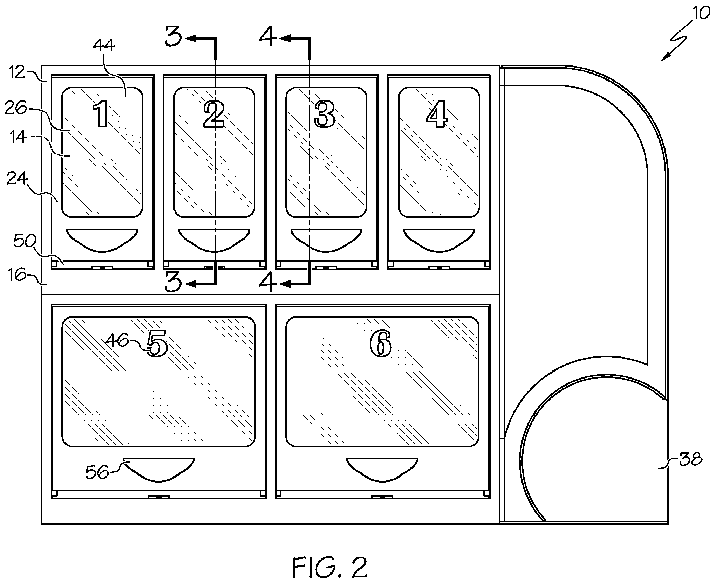

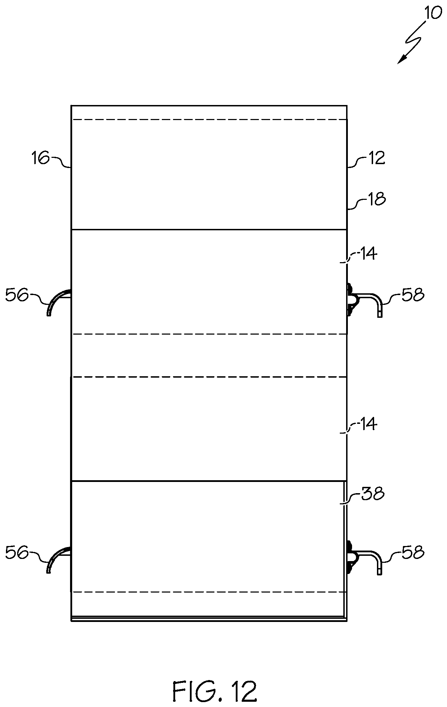

With reference to Figs. 1, 2, 12, 14 and 15, the order fulfillment system 10 can include a frame 12 that defines one or more compartments or passageways 14 therethrough. Each compartment or passageway 14 can extend an entire thickness of the frame 12 between a retrieval side 16 and a stocking side 18 thereof. Each compartment 14 can be sized to store/receive an item or product 33 to be delivered to the retrieving party. Each passageway 14 has or terminates at an end or opening 20 on the retrieval side 16 of the frame 12 and an end or opening 22 on the stocking side 18 thereof. A tray or platform 24, 24' can be fixedly, movably or pivotally/tiltably positioned within each passageway 14. Each passageway 14 and tray 24, 24' can in one case be entirely positioned in and surrounded by the frame 12, with no access thereto, except through the end openings 20, 22.

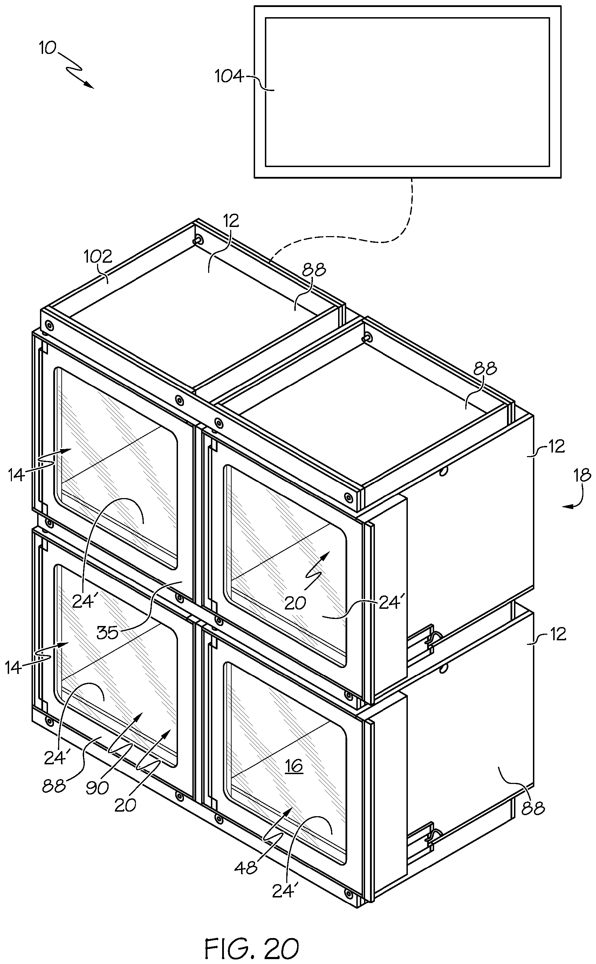

In one example, the frame 12 is a unitary housing component with a plurality of passageways 14 for a plurality of trays 24, 24'. Alternately, each tray 24, 24' may have its own individually-associated frame 12 that can be coupled to other frames 12 in a modular manner as shown for example in Fig. 20. The various passageways 14 of the different frames 12 may have the same or different shapes or dimensions, as appropriate for the products 33 to be transferred. In one example, the passageways 14 are generally rectangular in cross section and are between about eight and about sixty-one cm (three and about twenty-four inches) wide, and/or between about fifteen and about sixty-one cm (six and about twenty four inches) high, and/or between about fifteen and about sixty-one cm (six and about twenty four inches) deep. The passageways 14 may alternately have any of a variety of other shapes or dimensions as appropriate for the products 33 to be stored or transferred. Each tray 24, 24' can have about the same size and shape as a footprint of the passageway 14; for example, in one case each tray 24, 24' can have a surface area or footprint in top view that is at least about 75% in one case, or at least about 90% in another case, of a surface area or footprint in top view of the associated passageway 14, or its bottom surface thereof.

The system 10/frame 12 may include or be coupled to any of a variety of systems or devices for adjusting conditions inside the system 10/frame 12/passageways 14, such as heating devices, cooling or refrigeration devices, vents, humidifiers, dehumidifiers, systems for pressurizing and/or depressurizing, circulation and recirculating devices, etc. to control conditions within the system 10/frame 12/passageways 14 when products 33 reside in the system 10/frame 12/passageways 14. In addition, the system 10, frame 12, compartments 14, trays 24, 24' or other components may be made of materials that comply with relevant standards issued by NSF International in relation to materials for use near or in contact with food, such as food storage, handling and/or dispensing equipment. In one case the components can be made of or include a translucent, food-safe polymer material. In cases where the system 10 is to be used for dispensing liquids, the system 10, frame 12, compartments 14, trays 24, 24' or other components may be generally fluid-tight and lack crevices, seams, etc., and thus be designed to accommodate fluid spills while ensuring continuing operation of the system 10. In one case for example, the system 10 may include fluid channels that route spilled fluid to a fluid-tight reservoir that can be periodically emptied or cleaned.

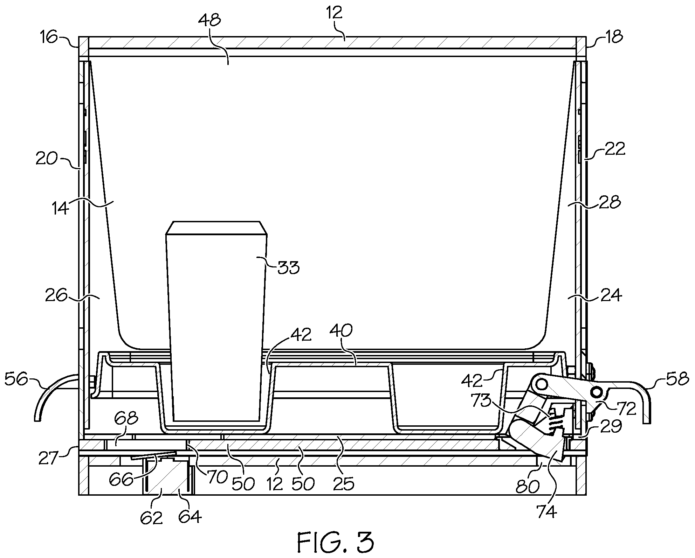

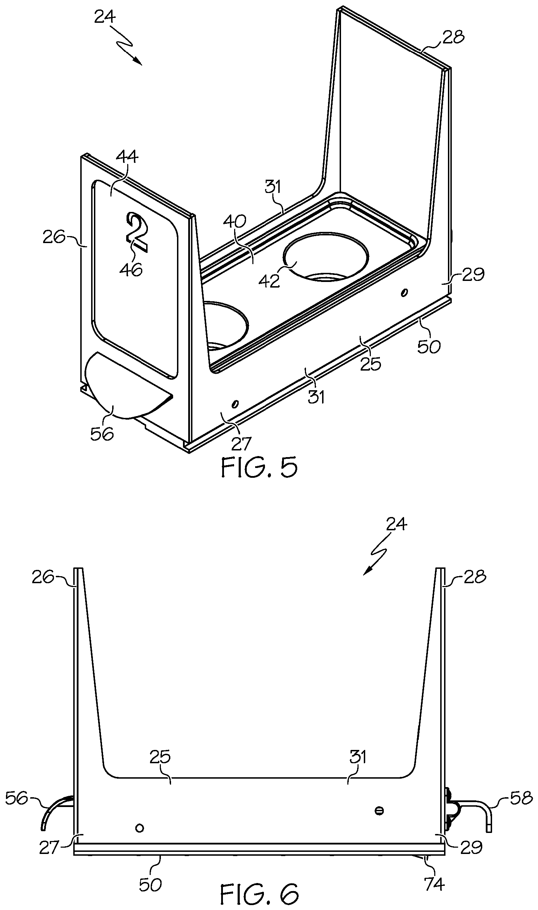

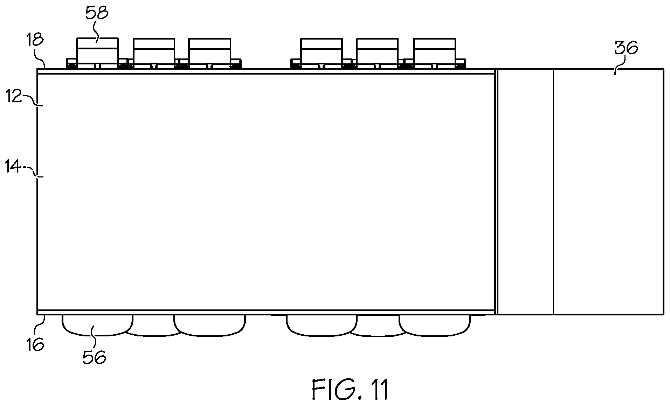

Figs. 1-13 illustrate a first example of the system 10, not according to the claimed invention. With reference to Figs. 5 and 6, each tray 24 of this example can include a product support surface or portion 25 that extends in the direction of the passageway 14 and is oriented generally horizontally during use. The product support portion 25 is configured to receive, and support thereon, the product 33 to be transferred from the stocking party to the retrieving party. For example, as shown in Figs. 3 and 5, the product support portion 25 can include a generally cylindrical recess 42 configured to receive a product 33 to be dispensed therein, wherein the product 33 takes the form of a generally cylindrical cup of coffee in the illustrated example.

Each tray 24 can be movable/translatable through the associated passageway 14 within and at least partially beyond the confines/outer edges/outer perimeter of the frame 12. For example, each tray 24 can be movable to a first extended position wherein the tray 24 at least partially passes or extends through the opening 20 on the retrieval side 16. As shown in Fig. 1 the trays 24 labelled with indicia 46 "1" and "6" are each in an extended position on the retrieval side 16 of the frame 12. When in the first extended configuration the trays 24 provide a retrieving party access to the product support portion 25 of the tray 24 and/or products 33 stored thereon, from the retrieval side 16 of the frame 12. Each tray 24 may also be moved/translated to a second extended position wherein the tray 24 at least partially passes or extends through the opening 22 on the stocking side 18 of the frame 12. In this position the tray 24 extends beyond the frame 12 on the stocking side 18 of the frame 12. When in the second extended position on the stocking side 18, the tray 24 provides access to the support portion 25 such that a stocking party can place a product 33 thereon for retrieval by the retrieving party. It should be noted in actual order of use for a given transaction the tray 24 may be first moved to the "second" extended position outlined above (on the stocking side 18 ) and then moved to the "first" extended position (on the retrieval side 16), and thus the designation of "first" and "second" extended positions can be reversed if desired.

The tray 24 can also be positionable in a closed or retracted position wherein, in one case, the tray 24 is centered or generally centered in the frame 12 and/or the associated passageway 14 in a front to back direction. In one example, the tray 24 is entirely, or generally entirely, contained within the frame 12 when in the closed position (see Figs. 3, 4, 11 and 12), although in some cases portions of the tray 24 may protrude on the stocking side 18 and/or retrieval side 16. For example, the trays 24 labelled with indicia 46 "2" through "5" in Fig. 1 are in their closed position. Each tray 24 may include a handle 56 on the retrieval side 16 and handle 58 on the stocking side 18 to facilitate manual movement of the tray 24 within the passageway 14 to or from either side 16, 18.

The tray 24 can include a pair of panels 26, 28 at each end thereof which provide access control features to limit access to contents of the tray 24/passageway 14. Each panel 26, 28 is oriented generally perpendicular to the support portion 25, and oriented generally vertically in one case. Panel 26 extends from the product support portion 25 at or near an end 27 thereof. Panel 28, which is optional in some cases, extends from the product support portion 25 at or near an end 29 thereof. Panel 26 may be sized and positioned to generally block the passageway 14 and thereby restrict access to the product support portion 25 of the tray 24 (and/or a product 33 positioned thereon) when the panel 26 is generally aligned with the opening 20, for example when the tray 24 is in its a closed position. Panel 26 can also restrict user access through the passageway 14 when the tray 24 is in its second extended position (i.e. protruding toward the stocking side 18). Conversely, when the tray 24 is in its first extended position (i.e. protruding toward the retrieval side 16, as in the case of trays 24 labelled with indicia 46 "1" and "6" in Fig. 1) panel 26 is moved away from (but still aligned with) opening 20, but does not block access to the passageway 14.

Panel 28, if utilized, can also be sized and configured to be positioned in the opening 22 and generally block the passageway 14 when the tray 24 is its closed position. Panel 28 can also restrict access through the passageway 14 when the tray 24 is in its first extended position (i.e. protruding toward the retrieval side 16, as in the case of trays labelled with indicia 46 "1" and "6" in Fig. 1). Conversely, when the tray 24 is in its second extended position (i.e. protruding toward the stocking side 18) panel 28 is moved away from opening 22, and does not block access to the passageway 14.

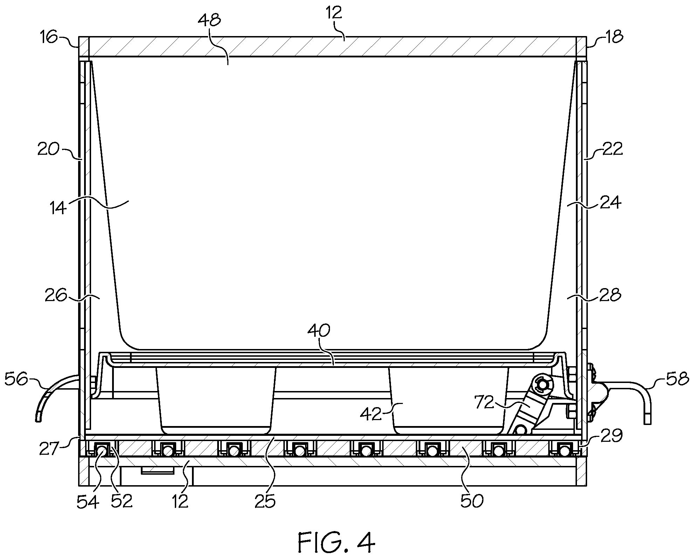

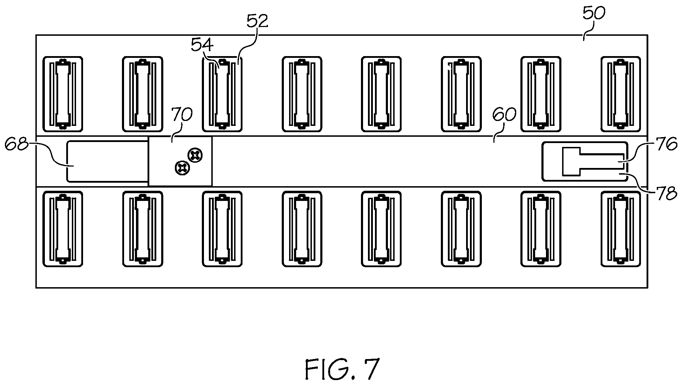

With reference to Fig. 7, each tray 24 may include a roller assembly 50 attached to a bottom surface thereof to facilitate translation of the tray 24 through the passageway 14 of the frame 12. In one example, the roller assembly 50 is attached to or integral with a bottom surface of the tray 24 (see Fig. 4). Alternately, the roller assembly 50 may be attached to or integral with the frame 12 within the passageway 14. The roller assembly 50 includes a plurality of roller modules 52, where each roller module 52 contains a roller 54 oriented to permit the tray 24 to move in either direction through the passageway 14 to reach either extended position. It should be understood that the system can include any of a variety of other roller systems, bearings, low friction surfaces, sliders, rails, grooves, etc. to guide movement of the trays 24. Moreover, in some cases each tray 24 may simply be slidably positioned on a flat underlying surface.

As discussed in more detail below, the tray 24/roller assembly 50 may also include a channel 60 (Fig. 7) that runs parallel to the passageway 14 to house and/or accommodate any of a variety of mechanisms that can control or otherwise restrict free movement of the tray 24 within the passageway 14. In one example, the channel 60 is generally centrally located within the roller assembly 50.

Referring now to Figs. 3-6, one example of a tray 24 is shown in greater detail. In the example of Figs. 3 and 4, the tray 24/support portion 25 has a length approximately equal to or slightly shorter than a length of the passageway 14 in which it is positioned. However, in some cases the tray 24/support portion 25 can have a length greater than a length of the passageway 14 such that the tray 24/support portion 25 extends beyond and edge of one or both of the openings 20, 22 when the tray 24 is in its closed position to provide ease of gripping. In one example, the panels 26, 28 extend generally perpendicular to the direction of movement/translation of the tray 24 within the passageway 14. The panels 26, 28 may be shaped and sized to generally match the cross-sectional size and/or shape of the passageway 24 and/or the associated openings 20, 22. Accordingly, when the tray 24 is in the closed position, in one case the panels 26, 28 generally align with their associated opening 20, 22, and both openings 20, 22 (and/or the passageway 14) are generally filled or blocked (e.g. in one case, at least about 80%, or in another case at least about 90%, of the surface area of each opening 20, 22 or passageway 14 is blocked, and/or no gaps or openings are provided about the panels 26, 28 that have a height (or greatest dimension) greater than about 1.3 cm (1/2" inch) in one case to prevent a person's hand from reaching therethrough). When the tray 24 is in its closed position the frame 12 and the panels 26, 28 thus form a closed or generally closed compartment 48 for storing a product 33.

When the tray 24 is in its closed position the support portion 25 of the tray 24 may not be able to be accessed (e.g. manually accessed in one case), and more particularly may not be able to be accessed from the retrieval side 16 and/or stocking side 18. Instead, if access to the support portion 25 and/or products 33 stored thereon is desired the tray 24 must be moved in either direction to an extended position where one of the panels 26, 28 is positioned sufficiently outside/beyond the associated opening 20, 22 to provide access from one of the sides 16, 18. For example, Fig. 1 illustrates a configuration in which the trays 24 labeled with indicia 46 "1" and "6" are in an extended position on the retrieval side 16, and access is provided to the contents of trays 24 from the retrieval side 16.

One or both panels 26, 28 may be made of generally opaque material. One or both panels 26, 28 may be formed of or include a window 44 of a transparent or translucent material such as glass, plastic, or acrylic to permit viewing of the contents of the tray 24 when the trays 24 are in their closed positions. Moreover, in examples including a plurality of trays 24, the trays 24, and more particularly the panels 26, 28, may include identifying indicia 46 such as alphanumeric characters or other symbols, color coding, or other characteristics to differentiate various trays 24 so that users on either side 16, 18 can readily identify a target tray 24. Each tray 24 may include the same, or in some cases different, indicia on both of its associated panels 26, 28. Alternately, the indicia 46 or other identifying features for the trays 24 may be positioned on portions of the frame 12 proximate to the passageways 14 in which the trays 24 are positioned or other appropriate locations and/or directly on doors 35, if utilized (as described in greater detail). The system 10 can also include light-emitting elements positioned on or adjacent to each tray 24/compartment 14/door 35 which can be activated to attract the retrieving party's (or stocking party's) attention. The light-emitting element may be able to emit various colors and be operated to attract the user's attention by flashing/blinking, etc. Other attention-attracting elements such as sound-emitting systems can be utilized.

If desired, one or more, or each tray 24, can lack a panel 28 proximate to the stocking side 18 of the frame. In this case the stocking party may be provided with unimpeded access to the support portion 25 of the tray 24 at all times. Controlling access to the support portion 25 of the trays 24 may be less important on the stocking side 18, such as when relatively low value products 33 are dispensed and/or when the stocking side 18 is relatively secure. However, in some cases, such as when relatively high value products 33 are dispensed and/or when the stocking side 18 is not relatively secure, it may be desired to utilize the panels 28 to control/limit unauthorized access by the stocking party.

Each tray 24 may also include a pair of opposed, spaced apart vertically oriented side panels 31 (Figs. 1, 5 and 6). Each side panel 31 can extend along the sides of the tray 24 between the panels 26, 28 to thereby create a containment area about the support portion 25. The tray 24/product support portion 25 may thus be adapted to receive a removable insert 40 positioned on/in the support portion 25. For example, the insert 40 can define the recess 42 in the illustrated example. The inserts 40 may be adapted to receive particular types of products 33, and differently-shaped inserts 40 can be used to accommodate different types of products 33 to improve presentation or safety. The inserts 40 can also be removable for easy cleaning, sterilization or replacement without having to remove the support portion 25 from the frame 12. Alternately, the support portion 25 itself may be shaped to provide such functionality without a separate insert 40.

In some cases, the system 10 may be configured or arranged such that the retrieving party only has access to the retrieval side 16 of the frame 12, and does not have access to the stocking side 18. For example, the frame 12 may be positioned in a wall, partition or the like (not shown), or itself form a wall, partition or the like, or be closely received in a correspondingly-sized opening in the wall, partition or the like to prevent a retrieving party from accessing the stocking side 18 of the frame 12. In other cases the frame 12 may be positioned on a counter (such as a service counter in a fast food or quick service counter, or otherwise adjacent to a restricted access area) in which the retrieving party's access to the stocking side 18 is blocked simply by the width/positioning of the counter and/or frame 16, and/or by the understanding that stocking side 18 is not supposed to be accessed by a customer. In this manner a stocking party can position products 33 to be dispensed in the system 10 from the stocking side 18. The products 33 can then reside in the frame 16 until the products 33 are accessed by a customer/retrieving party only on the retrieval side 16.

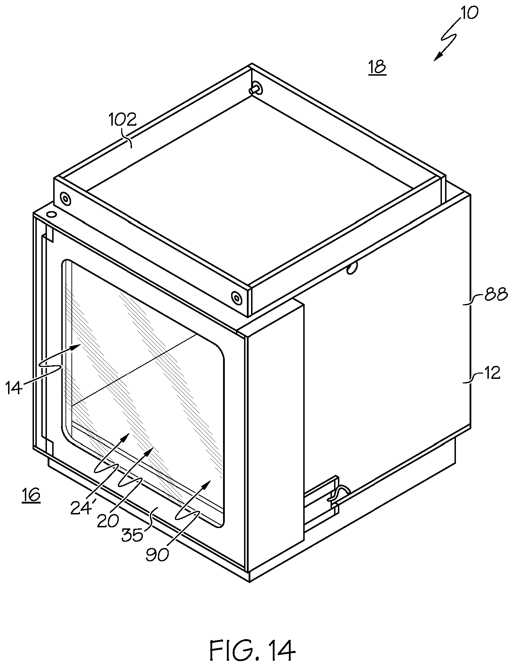

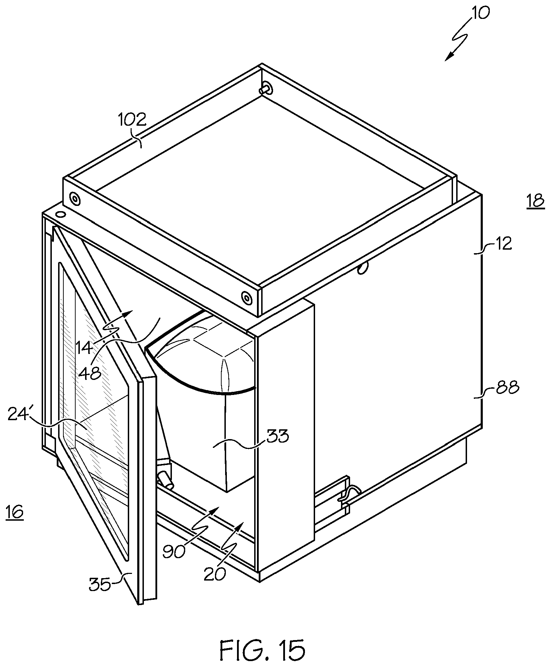

In one case, instead of, or in addition to the slidably tray 24 with end panels 26, 28, each compartment 14 may include a individually actuable movable/retractable doors 35 positioned in, at or adjacent to each opening 20, 22 at opposite ends of each compartment 14 (e.g. see door 35 in Figs. 14 and 15). The doors 35 illustrated in Figs. 14 and 15 have an opaque outer door frame with a transparent panel received therein. Each door 35 can be pivotable about a vertical hinge/axis positioned along one side of the compartment 14, or alternatively the doors 35 can be pivotable about different axes, be foldable, collapsible or slidable, be vertically movable along a set of rollers similar to an overhead garage door, or have other movable arrangements to selectively cover the associated opening 20, 22. Each door 35 can be movable between a first or closed position, where the door 35 generally blocks manual access to the compartment 14 from the side on which the door 35 is located, and a second or open position where the door 35 allows or does not generally block manual access to the compartment 14 from the side on which the door 35 is located. Each door 35 can thus provide access control features to limit access to contents of the tray 24/passageway 14.

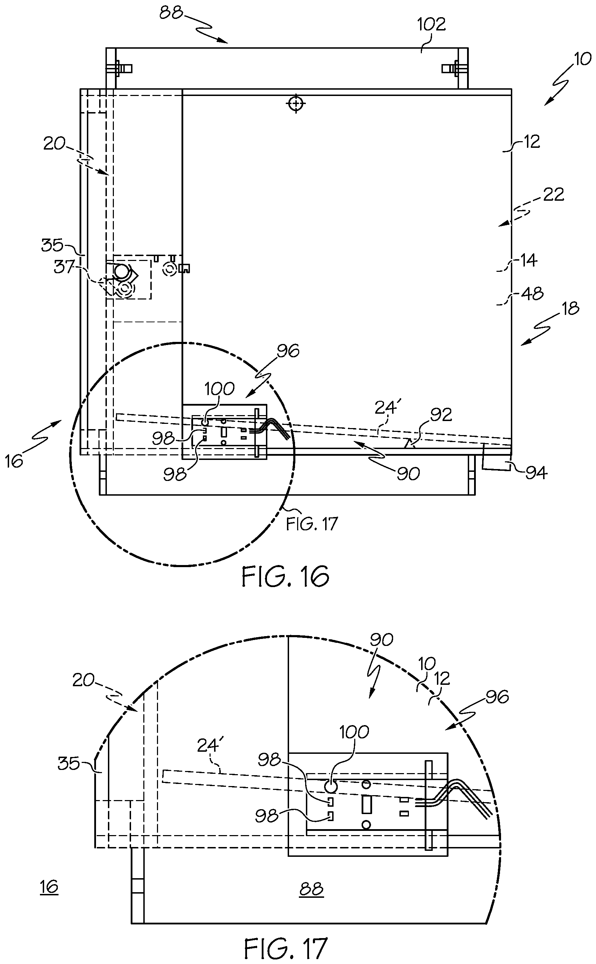

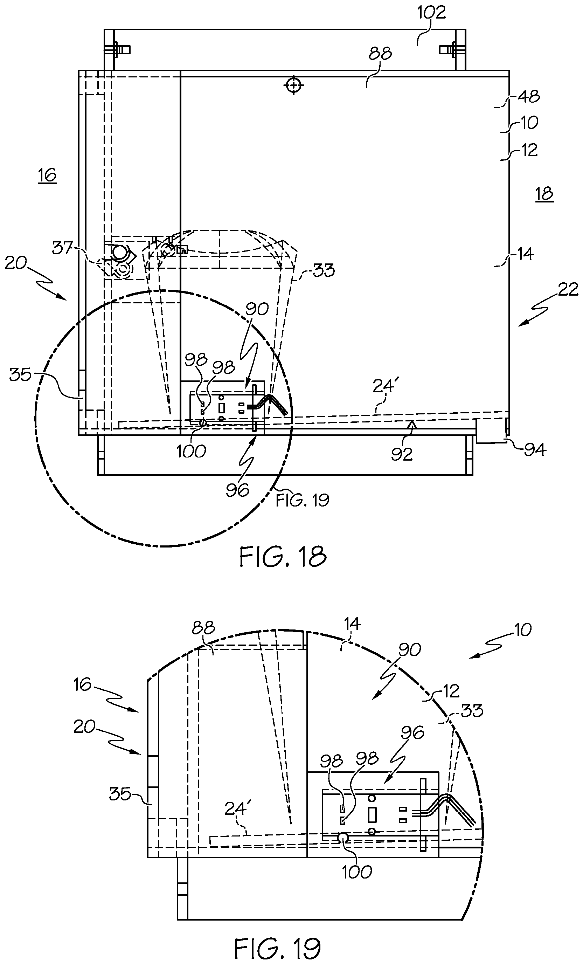

Each door 35 can be locked or lockable in its closed position by a latch 37 (Figs. 16 and 18) that is actuable via a solenoid or the like. The door 35 shown in Figs. 14 and 15 is positioned on the retrieval side 16 of the frame 12 to selectively provide/block access to the compartment 14 from the retrieval side 16. If desired another door 35 (not shown) can instead or in addition be positioned on the stocking side 18 of the frame 12 selectively provide/block access to the compartment 14 from the stocking side 18. In some cases, no doors are utilized, and instead relatively open access is provided both from the retrieval side 16 and the stocking side 18 (besides access blocked by the panels 26, 28 in the example of Figs. 1-13). When a door 35 is utilized, particularly but not limited to on the stocking side 18, a door 35 can cover a single or multiple compartments 14.

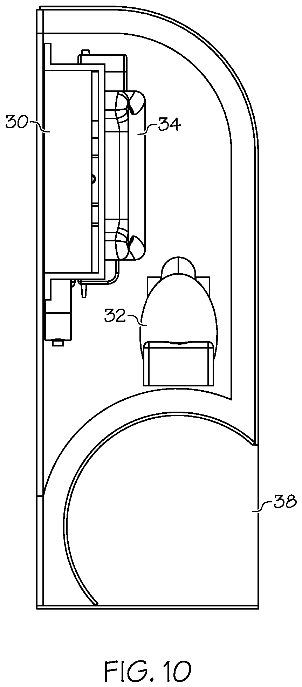

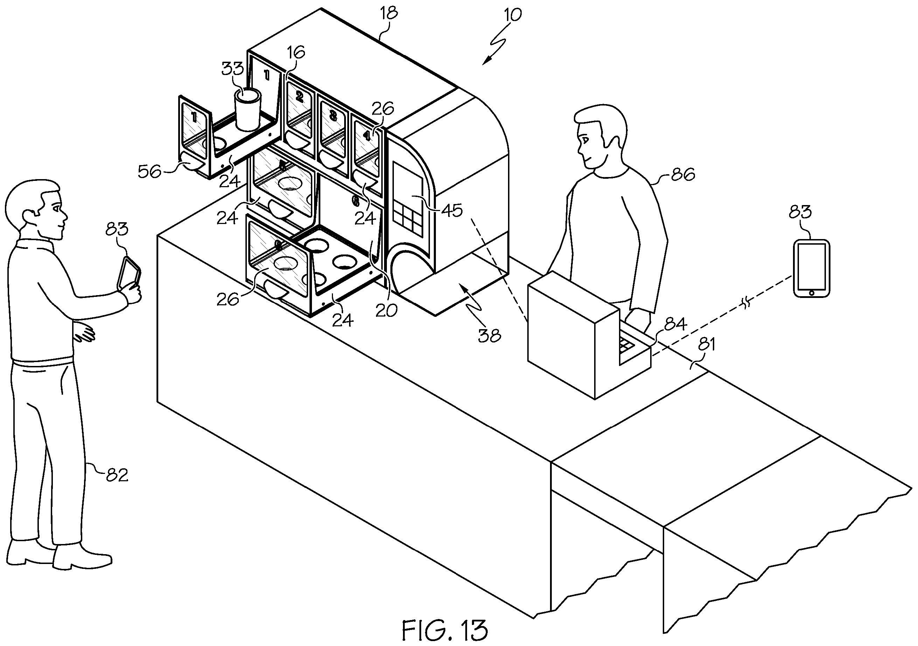

The order fulfillment system 10 can be configured to selectively control access to the trays 24 from users or retrieval parties on the retrieval side 16 of the frame 12, the stocking side 18 of the frame 12, or both, by allowing and/or restricting movement of the tray 24 through the associated passageway 14 and/or by allowing and/or restricting movement of the door(s) 35. In one case, the order fulfillment system 10 may have and/or be operatively coupled to a controller 30 (Fig. 10) which can be operatively controlled to the doors 35 and/or latch 37 and associated solenoid and other components (such as solenoid 62) as will be described in greater detail below. The retrieving party may be able to interact with the controller 30 to gain access to the appropriate compartment 14, and in one case the appropriate product support portions 25 of the appropriate/authorized tray(s) 24 to thereby access the products 33. The controller 30 may include or take the form of a processor, CPU, computer or the like, and may include or be operatively coupled to a sensor such as a scanner 32 (Fig. 10) and/or a user interface 45 (Fig. 13) in the form of a keypad, touch screen, keyboard, mouse, track ball, audio input device, or the like. The user interface 45 is shown in Fig. 13 as being positioned on the retrieval side 16, but the user interface 45 could instead or in addition be positioned on or accessible from the stocking side 18, or have various other positions. The controller 30 may be operatively connected to a router 34 (Fig. 10) to facilitate further communication and internet access.

The system 10/frame 12 may include, be attached to, and/or be positioned proximate to the controller 30, scanner 32, router 34, and/or other electrical and/or electronic components. The system 10/frame 12 may include an aperture 38 configured to receive components to be scanned therein, such as a mobile device including a cellular phone, tablet or the like (displaying a scannable or readable code), a printed or electronic receipt, a hand or finger for biometric identification, or the like. In this manner the component to be scanned can be inserted into aperture 38 by the retrieving party (or, in some cases, by the stocking party) for scanning/authentication by the scanner 32 or other sensor. However, the system 10/frame 12 need not include the aperture 38, and the scanner 32 may simply be able to read/scan an item placed in sufficient proximity to the scanner 32, or scan in forward or other directions. The scanner 32 or other sensor can provide its output to the controller 30, which can provide access/permission to the retrieving party (or deny access/permission, if appropriate) to retrieve product(s) 33 from appropriate compartment(s) 14/tray(s) 24 of the order fulfillment system 10.

Instead of or in addition to the scanner 32/sensor, identification/authentication of a user can be implemented or carried out in a variety of manners, including by the use of a user identification and/or password (such as via the user interface 45), the use of a key fob or other wireless device which wirelessly transmits in the radio frequency (or other) range, a mechanical or electronic key, the use of a mobile phone or device, a card with a magnetic strip in conjunction with a magnetic strip/card reader, an authorization code or the like remotely transmitted to the controller 30 (e.g. via the internet), through receipt of payment via cash or credit card, or various other means or mechanisms. A retrieving party may also be identified and/or make payment by mobile payment services that wirelessly communicate with point of sale systems using a near filed communication (NFC) antenna or the like, such as via APPLE PAY^{®} services or software offered by Apple Inc. of Cupertino California, or by other mobile wallet payment systems or digital wallet systems, and/or by implanted chips or the like.

In any case, in one example upon grant of access to a particular compartment 14/tray 24 via the controller 30, that compartment 14/tray 24 and/or the indicia 46 thereon, or the associated door 35, may automatically illuminate, flash, partially or fully open, or provide some other type of sensory output/effect to expedite identification of the appropriate compartment(s) 14/tray(s) 24. It should be further understood that in some cases the stocking party may be required to be authenticated before being granted access to a compartment 14/tray 24 using any of the methods described herein.

Referring now to Figs. 3-9, the order fulfillment system 10 of that example may include one or more electronic and/or mechanical access control/restriction mechanisms to restrict and/or allow access to the contents of the compartment 14/tray 24 by the stocking and retrieving parties. Generally, the stocking party may have broad or greater access to many or all of the compartments 14/trays 24 from the stocking side 18 of the frame 12. In contrast the retrieving party's access from the retrieval side 16 of the frame 12 may be more limited and/or strictly limited to the particular compartment(s) 14/tray(s) 24 which contains a product 33 that the retrieving party is authorized to accesses or possess (for example, after verification by the controller 30 of payment for the product 33). However, access may alternately be more strictly or loosely controlled on either side 16, 18 of the frame 12 as appropriate for the particular application.

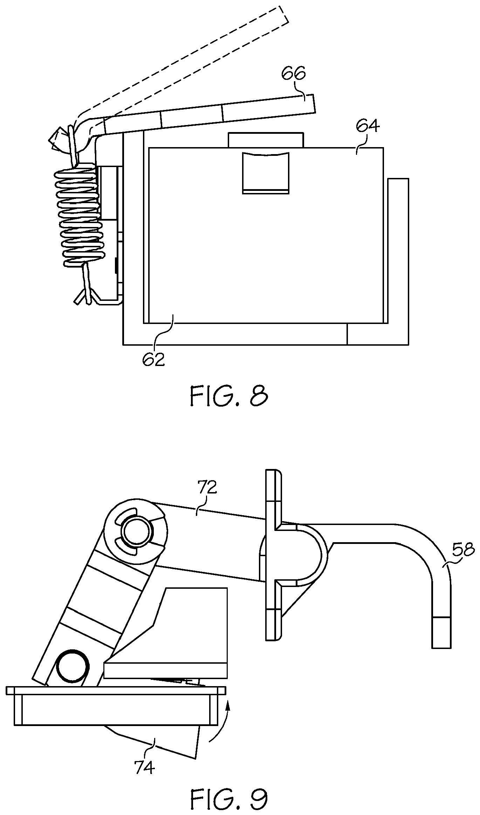

With reference to Figs. 3 and 8, the order fulfillment system 10 may include, for each passageway 14/tray 24, a solenoid, transducer, or other activatable component 62 associated therewith and operatively coupled to the controller 30 to control access to the contents of the tray 24. The solenoid 62 includes a body 64 which may be positioned within the frame 12 beneath the roller assembly 50 of the tray 24, and a plate 66 which is movable between a retracted position where the plate 66 is positioned adjacent the body 64 (shown in solid lines in Fig. 8) and an extended position (shown in dashed lines in Fig. 8) where the plate 66 extends upwards through an aperture 68 (Fig. 7) in the channel 60 of the roller assembly 50. Accordingly, when the plate 66 is in the extended position and a retrieving party on the retrieval side 16 attempts to move the tray 24 to the first extended position and gain access to an associated product 33 (with reference to Fig. 3, pulling handle 56 to the left), a stop 70 at the edge of the tray 24/roller assembly 50 contacts the plate 66, which prevents such attempted extraction of the tray 24. The plate 66 and stop 70 may be configured to block movement of the tray 24 to the first extended position when the plate 66 is raised, but allow movement of the tray 24 toward the second extended position when the plate 66 is raised. Alternately, the plate 66 and stop 70 may be configured to block movement of the tray 24, when the plate 66 is actuated, in both directions away from its closed position (e.g. block movement of the tray 24 toward either the first or second extended position).

In contrast, if the plate 66 is in the retracted position, then the plate 66 is not positioned in the aperture 68 and the tray 24 can be moved past the opening 20 on the retrieval side 16 (and/or past the opening 22 on the stocking side 18) to enable the retrieving party (or stocking party) to access the contents of the tray 24. Thus, the retrieving party (or stocking party) may in some cases only access the contents of the tray 24 upon satisfaction of all conditions set by the controller 30 to retain the solenoid 62/plate 66 in the retracted position. The controller 30 could also be human-controlled, where a person provides direct instructions to the controller 30 to unlock the tray 24 after, for example, identifying the purchaser and processing payment.

With reference to Figs. 3, 7, and 9, the order fulfillment system 10 may include, for each passageway 14/tray 24, a latch assembly 72 to control access to the contents of the tray 24 from the stocking side 18 of the frame 12 (and/or the retrieval side, if desired). The latch assembly 72 may include one or more levers (including, in one example, the handle 58), hinges, and/or springs 73 operatively connected to a stop 74. The stop 74 may be spring-loaded and biased to extend through an opening 76 of a pivot plate 78 positioned within the channel 60 of the roller assembly 50 (Fig. 7), and receivable in a recess 80 (Fig. 3) of the frame 12. Accordingly, the stop 74 is movable to a blocking position where the stop 74 is positioned within the recesses 76 and/or 80 to prevent movement of the tray 24 through the opening 22 to the stocking side 18 of the frame 12 (e.g., with reference to Fig. 3, movement of the tray 24 to the right is blocked). In some cases, movement of the tray 24 in only a single direction (either single direction) is blocked when the latch assembly 72 is in its blocking position. Alternately, movement of the tray 24 in both directions is blocked when the latch assembly 72 is its blocking position.

The latch assembly 72/stop 74 also has an open position, where the latch assembly 72 can be manually operated, against the spring bias 73, to retract the stop 74 out of the recesses 76 and/or 80 (e.g. the stop 74 is pivotable in the direction of the arrow in Fig. 9). In this case the latch assembly 72 may thereby not block movement of the tray 24 out from the passageway 14 through the opening 22 on the stocking side 18 of the frame 12 and/or retrieval side 16. In the depicted example of the latch assembly 72, the stop 74 is biased to the blocking position as its default position, and when the handle 58 is operated, the stop 74 is retracted upward out of the recess 80 to transition to the open position.

It should be appreciated that both the solenoid/ activatable component 62 and the manually-operated latch assembly 72 (which together or apart, or in the form of various other mechanisms or devices, can constitute an access control system) could alternately include or take the form of any of a variety of lock and/or release mechanisms. For example, the latch assembly 72 could be replaced with a solenoid similar to that of solenoid 62, but with different control parameters, such as a pressure or force sensor or other sensor, a push button, a keypad, or the like that ensures that the latch assembly 72 is in or moves to the retracted positioned when the stocking party requires access to access the tray 24 for stocking. The latch assembly 72 and/or activatable component 62 may be operatively connected to and/or controlled by the controller 30. In this manner the latch assembly 72 and/or activatable component can also control access to the tray 24 on the stocking side 18 such that the stocking party may be required to provide identification or otherwise be authenticated prior to being able to move a tray 24 and/or gain access thereto.

One example, not according to the claimed invention, of an ordering process incorporating or utilizing the order fulfillment system 10 will now be described, in the exemplary context of a fulfilling an order for a beverage at a coffee shop, with reference to Fig. 13. The order fulfillment system 10 is, in this example, positioned within the coffee shop with the stocking side 18 of the frame 12 facing a restricted access area, for example facing behind the service counter 81, and the retrieval side 16 of the frame 12 facing a location accessible to the public, or a less-restricted area. In the default/starting configuration, all of the trays 24 are in their closed positions with all of the panels 26, 28 generally aligned with their associated openings 20, 22 of their respective passageways 14. Each solenoid 62 is in the extended position, where each associated plate 66 prevents extension of each associated tray 24 past the opening 20 on the retrieval side 16. In addition the stop 74 of each latch assembly 72 is in the blocking position, preventing extension of the tray 24 past the opening 22 on the stocking side 18.

A customer/retrieving party 82 can place an order with the coffee shop at a location remote from the shop, or (in one case) other than in a face-to-face transaction, for example through an internet website, a mobile application, a phone call, a fax order, or the like. Fig. 13 illustrates a remotely positioned mobile device 83 controlled by the customer 82 for placing such an order. Alternately, the order can be place via an in-person interaction with an on-site cashier, and the order can be fulfilled using the system 10 and method described herein, or the order can be placed using a mobile device 83 that is positioned on-site, etc. The order can be automatically or manually inputted into a computer system, point-of-sale device, etc. 84, which can be in communication with the system 10/controller 30. The order can be paid for by the customer 82 by their mobile device 83 (remotely) or paid for on-site or at the location of pick-up of the item 33.

A barista 86 (e.g. the stocking party) prepares the beverage 33, and once complete, prepares to load the beverage 33 into one of the plurality of compartments 14/trays 24 of the order fulfillment system 10 from the stocking side 18 of the frame 12. In one example, the controller 30 selects the appropriate compartment 14/tray 24 for the stocking party 86 to use based upon size of the product 33, availability of the compartment 14/tray 24, expected pick-up time, accessibility/location of the compartment 14/tray 24, etc. The controller 30 then identifies the automatically selected compartment 14/tray 24 to the stocking party 86 via a video display/user interface 45, indicia 46 on the frame 12, or the like, and can open/unlock the associated door 35 on the stocking side 18 (if utilized). In an alternate embodiment, the stocking party 86 selects the compartment 14/tray 24 to be used and provides the compartment/tray identity information to the controller 30 via a user interface 45 such as a keyboard/keypad, touch screen, or other user input device, and/or the controller 30 may be able to automatically sense which compartment 14/tray 24 has been selected and/or used through various sensor.

To access the appropriate compartment 14/tray 24 and insert the beverage 33, the stocking party 86 opens the appropriate door 35 (if utilized) and depresses the handle 58 to activate the latch assembly 72. This movement of the handle 58 moves the stop 74 to the open/retracted position, and the stocking party 86 then pulls the tray 24 through the passageway 14 until the panel 28 and at least a portion of the product support portion 25 of the tray 24 extends past the opening 22. When the compartment 14/tray 24 is thus in its second extended position, the stocking party 86 is thereby provided direct manual access to the product support portion 25, and/or insert 40/cup holder 42 contained thereon. The stocking party 86 then positions the beverage 33 within the cup holder 42 (if utilized), and slides the tray 24 back towards the frame 12 until the tray 24 is returned to the closed position with the stop 74 of the latch assembly 72 back in the blocking position. In cases where a movable tray 24 is not utilized, the stocking party 86 can simply place the item 33 in the compartment 14 and on a relatively fixed tray 24', or directly on a lower surface of the compartment 14. Access to the compartment 14/tray 24 by the stocking party 86 can in some cases be open (unrestricted), or access can be controlled for each compartment 14, or a single access control cover or the like can be used which controls access to multiple compartments 14.

In one example, the stocking party 86 then uses the user interface 45 to indicate to the controller 30 that the beverage 33 is positioned within the closed compartment 48, defined collectively in one case by the tray 24 and the compartment 14/frame 12 and/or doors 35, and ready for retrieval by the customer/retrieving party 82. In another example, the order fulfillment system 10 includes sensors in communication with the controller 30 to automatically determine that the beverage or other item 33 is positioned in a compartment 14 and/or on a tray 24 and ready for retrieval. For example, the latch assembly 72 may include sensors that indicate to the controller 30 when the latch assembly 72 is opened and closed. The controller 30 may be programmed to recognize that for an assigned tray 24, opening the tray 24 from the stocking side 18 followed by closing the tray 24, indicates that an order is ready for pick up. Alternately, or in addition, the tray 24 may include weight sensors, cameras, presence sensors and/or other types of sensors in communication with the controller 30 to automatically determine when an order 33 is stocked, one example of which is described in greater detail below.

Once the item 33 is stocked, the controller 30 may signal to the retrieving party 82 that the order is fulfilled and ready for pick-up, for example with an email, phone call, text message or other contact via mobile device 83, by an audio or visual signal, through interaction with a vibrating signal device, by providing an output from or one the frame 12 and/or compartment 14 and/or tray 24, via an output on the user interface 45 or a display screen, or any of a variety of other signaling methods. The compartment 14/tray 24/door 35 and/or the indicia 46 thereon may in one case illuminate, flash, make a sound, or otherwise provide additional signals to direct the customer to the proper compartment 14/tray 24 containing the customer's order. In some cases the signaling may only occur after payment for the item 33 has been received and/or when the customer 82 presents a code scanned by the scanner 32 or presents some other identifier so that the controller 30 knows that the customer is physically present.

The signal from the controller 30 and/or information provided to the customer at the time of purchase may also include additional information for the retrieving party 82, such as the identity (e.g. compartment number or door number) of the specific compartment 14/tray 24/door 35 which contains the order, a summary of the order contents, the amount of the payment due, a receipt indicating payments made, instructions or information for retrieval of the order (such as providing access codes or a scannable code), and the like. If the retrieving party 82 does not retrieve the order within a predefined period of time, for example, within 5, 10, 15, or 30 minutes, the controller 30 may send a follow-up communication to the retrieving party 82 and/or the stocking party 86 to indicate that the order has not been picked-up. This feature can be particularly useful for items that are desired to be served heated or cooled, or within a certain time window.

In any case, once the order it stocked and the customer notified, the customer 82 approaches the order fulfillment system 10 from the retrieval side 16 of the frame 12. Even though the customer's order is prepared, the compartments 14/trays 24/doors 35 may be locked from the retrieval side 16 so that the controller 30 can control the customer's access to the appropriate compartment 14/tray 24. The controller 30 can prevent movement of the tray 24 toward the retrieval side 16, and/or opening of the appropriate door 35 unless and until the controller 30 determines that an approved transaction has occurred and the customer is physically present, or the controller 30 otherwise receives information regarding approval of the transaction and/or dispensing. For example, the customer 82 may place the order remotely, but provide payment on-site, in which case the order may be stocked but not be made accessible unless and until payment is made.

The customer 82 may gain access to the compartment 14/tray 24 in any of a variety of ways. In one example, the customer is provided with a scannable code on a purchase receipt, which may be printed or electronically displayed on a mobile device, such as mobile device 83 in Fig. 13 associated with the customer 82 inside the store. The customer 82 may then position the paper or device with the scannable code in proximity to the scanner 32, for example in one case in the aperture 38 of the frame 12. If the controller 30 accepts the code, access may be granted to the customer 82. Alternately, the retrieving party 82 may be provided with an access code or password, such as by including the code on the receipt and/or by text message, email, etc. The controller 30 may include and/or be operatively connected to a user interface 45 such as a keypad or a touchscreen, where the retrieving party 82 may enter the access code to authenticate access rights. Further alternately, access may be granted by any of a variety of other methods, including insertion of an authentication token, presentation of a key fob or other wireless device which transmits wirelessly in the radio frequency range (or other frequencies), a mechanical or electronic key, a card with a magnetic strip in conjunction with a magnetic strip/card reader, the use of biometrics, through insertion and acceptance of currency (similar to a vending machine), providing a code or password, or any other method known in the art.

When dispensing items such as alcoholic beverages, tobacco products, pharmaceuticals or other controlled substances or items, the retrieving party may be required to provide a secondary source of identification and/or identification which documents the age, identity or other authority of the retrieving party 82. In some cases the retrieving party 82 may provide an access code in an attempt to access the compartment 14 with the controlled item 33. The controller 30 may acknowledged the properly scanned code but then direct the retrieving party 82 to an on-site attendant before the controlled item 33 can be released. The on-site attendant can then review the credentials of the retrieving party 82, and when the credentials are verified the attendant can notify the controller 30 or provide a further access code to the retrieving party 82. The controller 30 can then provide access to the controlled item 33 (e.g. unlock a door 35 or activate the solenoid 62, as directed by the on-site attendant), or the system 10 may require the retrieving party to scan their access code a second time before providing access to the controlled item 33. Further alternatively, the system 10 may have systems that can scan and automatically authenticate a retrieving party 82 such as by, for example, scanning a drivers' license or other information with the person's age or credentials, and in some cases compare a visual scan of the person, to the identity presented in the person's credentials, such as through a scanner and/or remote camera.

Once the controller 30 verifies/authenticates the customer and/or grants access, the controller 30 can grant access by moving the plate 68 to the retracted position. This (or other action, as desired) thereby permits the customer 82 to use the handle 56 on the retrieval side 16 of the frame 12 to freely move the tray 24 until at least a portion of the product support portion 25 of the tray 24 is positioned past the opening 20 and/or access to the product 33 is provided. Alternately or in addition, when it is desired to provide access and a door 35 is utilized, the door 35 on the retrieval side 16 can be unlocked and/or opened. In one example, the compartment 14/tray 24/door 35 may automatically fully or partially open upon authorization by the controller 30; e.g. by a motor, solenoid, by releasing a spring biased component, etc. Further alternately, the compartment 14/tray 24 and/or associated door 35 can be automatically unlocked once the customer 82 is authenticated and the customer's attention is directed to the fact that the compartment 14/tray 24 and/or door 35 is unlocked, or a simple interlock may be utilized that requires customer action to further open or access the compartment 14/tray 24. Once the door 35 and/or tray 24 is open, the customer may manually access and retrieve the beverage order or other item 33 from the compartment 14/tray 24 to complete the transaction.

In one example, the controller 30 grants access only a single time per order, such that once the door 35/tray 24 has been opened and closed from the retrieval side 16 of the frame 12, the solenoid 62 resets to move the plate 66 back to the extended position and/or the door 35 is locked. The compartment 14/tray 24 can then be indicated to be ready for use for another order. If desired the controller 30 can grant access to multiple compartments 14/items 33 at a time. For example, a single order may be sufficiently large that it is placed in multiple compartments 14, and in this case authentication by the retrieving party 82 may grant access to all compartments 14 storing items 33 associated with the order. Optionally, the system 10 may include sensors to monitor whether the product 33 has actually been removed from the compartment 14/tray 24. In one example, the order fulfillment system 10 may send an alert or message (e.g., an audio or visual signal, or digital signal via email, push notification, web site, sms, etc.) if the door 35 or tray 24 is not closed after order retrieval, to notify the stocking party 86. In another example, the tray 24 and/or the frame 12 may include a mechanism to automatically retract the tray 24 after the order is retrieved and/or automatically close and/or lock the door 35.

In an embodiment of the system 10 according to the claimed invention as shown in Figs. 14-20, the system 10 includes or takes the form of one or more modules 88, each of which has a frame 12 and a compartment positioned 14 therein. Each module 88 can include a door 35 on the retrieval side 16, but in the illustrated embodiment lacks (but could include) a door on the stocking side 18, and the compartment 14 is thus open in the stocking side 18 (see Figs. 16-18). In one case, the system 10 and/or each module 88 can include an item sensor, presence sensor, or presence sensor system 90 configured to sense when items 33 are present in, placed in, not present in and/or removed from a compartment 14 or tray 24'. For example the item sensor 90 can include or take the form of pressure or force sensors, weight sensors, optical or line-of-sight sensors, detectors based on mechanical forces, membrane switches/sensors, magnetic switches/sensors, light or electromagnetic radiation (visible, infrared or otherwise) sensors, contact sensors, photoelectric sensors, ultrasonic sensors, piezoelectric sensors, piezoresistive sensors, accelerometers, motion sensors, tilt sensors, proximity sensors, electric field sensors beam break sensors, acoustical sensors, capacitive sensors or others. The item sensor 90 may be able to sense items 33 of various sizes, shapes, colors, transparencies, reflectances and weights located at various positions in the compartment 14 and/or positions on the tray 24'.

In the embodiment of Figs. 14-20, according to the claimed invention, the compartment 14 does not include a slidable tray 24 therein, and instead a pivotable or tiltable tray 24' is positioned in the compartment 14 where the tray 24' is tiltable to sense when items 33 are present/absent and/or added/removed. Thus the item sensor 90 in this case can include the tray 24'. The tray 24' can be coupled to the underlying horizontal surface of the compartment 14 at or by a pivot mount or fulcrum 92 (Figs. 16 and 18). The tray 24' can include a counterweight 94 coupled thereto, and be mounted/configured to be biased by gravity to a first/retracted position as shown in Figs. 14, 16 and 17, where the tray 24' is positioned when no items 33 are placed thereon. The tray 24' can be slightly inclined relative to a horizontal direction (relative to a gravitational frame of reference) when in the retracted position. The angle of inclination can be relatively slight, such as less than about 5 degrees in one case. In addition tray 24' can be angled, when in the retracted position, away from the retrieval side 16 and toward the stocking side 18 so that any items (such as fluid spills, crumbs, etc.) may slide/roll down the tray 24' toward the stocking side 18.

The tray 24' is configured to pivot about a generally horizontally extending axis via the pivot mount 92 to a second/extended position as shown in Figs. 15, 18 and 19 when an item 33 or items 33 are placed thereon. When in the second position the tray can 24' be oriented generally horizontally, or with a slightly forward incline, but in one case is more level (e.g. has a smaller angle) than when the tray 24' is in its retracted position. The tray 24' and counterweight 94 can be configured so that the tray 24' is biased to the retracted position, but moves to the extended position when relatively little weight is positioned thereon (positioned on the side of the tray 24' positioned closer to the retrieval side 16). In one case the tray 24' moves from the retracted to the extended position when weight as little as about 1 gram (e.g. the weight of a small, empty cup) in placed on the tray 24' providing relatively high sensitivity. When the items 33 is removed from the tray 24', the tray 24' automatically returns to its retracted position due to the counterweight 94.

The system 10/item sensor 90 includes a tray position sensor 96 mounted on the frame 12 and configured to determine whether the tray 24' is in its first and/or second position, to thereby also determine if an item 33 for dispensing is positioned on the tray 24'. In one case the tray position sensor 96 is or includes a magnetic sensor with two magnetic sensor portions 98 that are vertically spaced away from each other, and a magnet 100 embedded in the tray 24' or coupled thereto. The magnetic sensor portions 98 are in one case positioned externally of the compartment 14 but can magnetically interact with the magnet 100 to sense the position of the tray 24'. The positions of the magnet 100 and magnetic sensor portions 98 can be reversed if desired such that the magnets 100 are positioned on the frame 12 and the magnet sensors 98 mounted on the tray 24'. Moreover, any of a wide variety of other sensors can be utilized to sense the position of the tray 24'.

When the tray 24' is in its retracted position, as shown in Figs. 16 and 17, the output of the upper sensor 98 would be greater than the output of the lower sensor 98, due to the proximity of the magnet 100. The controller 30 can then use that information to determine that the tray 24' is in its retracted position. Conversely, when the tray 24' is in its extended position, as shown in Figs. 18 and 19, the output of the lower sensor 98 would be greater than the output of the upper sensor 98, due to the proximity of the magnet 100. The controller 30 can then use that information to determine that the tray 24' is in its extended position, and that an item 33 is positioned on the tray 24'. The use of two sensor portions 98 can provide accurate sensing, and the sensor 96 can use logic/circuitry to store or retain the last position of the tray 24' in case the tray 24' travels past its expected range of movement, making adjustment of the item sensor 90 unnecessary. In this case the same sensor 90/96 or sensor logic/circuitry disclosed in the embodiment of Figs. 14-20 can be used to sense the position of the movable tray 24 of the example of Figs. 1-13, in either its closed position, and/or extending into the retrieval side 16 and/or extending into the stocking side 18.

The item sensor 90/position sensor 96 can be operatively connected to the controller 30. In this manner, the controller 30 can determine when a compartment 14 has an item 33 positioned therein to notify a customer 82 and/or stocking party 86 that the item 33 is ready for pickup and/or send reminders to the customer 82 and/or stocking party 86 when an item 33 has not been picked-up after a predetermined period of time. The item sensor 90/position sensor 96 can also aid in tracking which compartments 14 are available for re-stocking after an item 33 has been picked up.

In one case the modules 88 are stackable and arrangeable in various configurations to provide a system 10 with modules/compartments in the desired arrangement and configuration, one of which is shown in Fig. 20. Each module 88 can include an upper protruding lip 102 extending around its perimeter that is configured to closely fit into an opening or recess on the bottom of another module 88 to aid in vertical stacking. If desired, one of the modules 88 in a stack or arrangement can be replaced with other modular components having generally the same size and shape, such as in one case a user-interface module including a user-interface screen 45 that is operatively connected to the controller 30.

Multiple systems 10 or modules 88 can be arranged as needed and coupled together and/or having their controllers 30 directly linked, or commonly linked to a controller 30 or computer system 84. Each system 10 or module 88 can share a common controller 30 that can be connected with the central computer system 84 by either wire or wireless connections. The systems 10/modules 88 can be stacked to form a complete countertop system or a free standing system, for example with a fascia covering the individual units to provide an integral appearance or branding theme to the systems 10/modules 88.

The system 10 can include or be coupled to one or more display devices 104 (Fig. 20), such as a monitor, television screen, display screen or the like, which can be included as part of the user interface 45 or as a separate display. The display device 104 can be viewable by customers 82 on the retrieval side 16 and can display various information such as status of the customer's order, wait time, advertising and promotional programming, etc. The display device 104, and/or a different display device, can also or instead be viewable by an employee/stocking party 86 and display information such as the content of orders to be filled, the status of orders in process, waiting time, which compartments 14 are to be filled/stocked with which items, etc. The display device 104 can also include and/or be connected to a user interface accessible by the stocking party 86 so that the stocking party 86 can indicate when an order is filled, or rearrange the priority of orders, provide bump bar functionality, etc.

Accordingly, the order fulfillment system 10 facilitates efficient self-service customer retrieval of goods, including remotely-purchased and/or remotely-ordered goods. A seller can remotely accept orders and/or payment for such orders from a plurality of customers, and then prepare each order for customer pickup in a secure manner without the need for interpersonal interaction with the customer and without the need to locate and provide each customer's particular order upon the customer's arrival. The system 10 thus enables both organization and segregation of each order into a different compartment 14/trays 24, 24', and also provides security to ensure that customers only retrieve the order(s) for which they have paid. The system and method saves time and improves efficiency for the customer, who can, in some embodiments, self-retrieve purchased products upon arrival at the sale or retrieval site without having to interact with store personnel. Efficiency is also improved for the seller who may not need to dedicate personnel to locate and provide orders to the customer upon the customer's arrival. Efficiency is also improved for other on-site customers who might otherwise experience increased wait time due to personal interactions to provide completed orders to remote-order customers.

## Claims

1. An order fulfillment system comprising:
a frame (12) defining a passageway (14);
a tray (24') positioned in the passageway (14) and pivotable about a generally horizontally extending axis between a first position and a second position; and
a sensor system (90) configured to sense the position of the tray (24'), wherein said passageway (14) is a continuous opening extending through said frame (12) and has a first opening at a first end thereof on a first side of said frame (12) and a second opening at a second, opposite end thereof on a second side of said frame (12), and wherein the system is configured such that an item (33) to be dispensed is insertable into the passageway (14) and onto the tray (24') in a first direction through the first opening, and is thereafter removable from the passageway (14) in the first direction through the second opening, **characterised in that** the sensor system (90) includes an electronic sensor (96) configured to sense the position of the tray (24') and to provide an output.

2. The system of claim 1 wherein the tray (24') is pivotable between the first position when no items (33) are positioned on the tray (24') and the second position when an item or items (33) of a sufficient predetermined weight are positioned on the tray (24').

3. The system of any preceding claim wherein the tray (24') is configured such that when the tray (24') is in the first position the tray (24') is inclined relative to a horizontal frame of reference at a first angle and when in the second position the tray (24') is inclined relative to the horizontal frame of reference at a second angle that is different from said first angle.

4. The system of any preceding claim wherein the tray (24') is configured such that when the tray (24') is in the first position the tray (24') is angled away from a front of the frame (12) and when in the second position the tray (24') is not angled away from the front of the frame (12).

5. The system of any preceding claim wherein said passageway is oriented generally horizontally.

6. The system of any preceding claim wherein the frame (12) defines a plurality of passageways (14) and each passageway (14) includes a pivotable tray (24') positioned therein, and wherein the sensor system (90) is configured to sense the position of each tray (24').

7. The system of any preceding claim further comprising a door (35) coupled to said frame (12), wherein said door (35) is movable between a first position where said door (35) generally blocks access to at least one end of said passageway (14) and a second position where said door (35) does not generally block access to said end of said passageway (14).

8. The system of any preceding claim further comprising a controller (30) in the form of a processor, CPU, computer or the like operatively coupled to said sensor system (90) (9u) and configured to determine whether an item or items (33) of a sufficient predetermined weight are positioned on the tray (24').

9. The system of claim 8 except where dependent on claim 7, further comprising a door (35) coupled to said frame (12), wherein said door (35) is movable between a first position where said door (35) generally blocks access to at least one end of said passageway (14) and a second position where said door (35) does not generally block access to said at least one end of said passageway (14), and wherein said controller (30) is operatively coupled to said door (35) to lock or unlock said door (35) in said first position, and wherein the controller (30) is configured to retain said door (35) in a locked state unless the controller (30) determines that an approved transaction has occurred or unless the controller (30) receives information that an approved transaction has occurred, after which the controller (30) is configured to unlock said door (35).

10. The system of any preceding claim wherein the electronic sensor (96) includes a pair of sensor portions (98), wherein the first sensor portion (98) is configured to detect when the tray (24') is in the first position, and wherein the second sensor portion (98) is configured to detect when the tray (24') is in the second position.

11. The system of claim 10 wherein the first (98) and second (98) sensor portions are vertically spaced apart.

12. The system of any one of claims 1-9 wherein the electronic sensor (96) includes a pair of sensor portions (98), wherein the tray (24') is configured to be positioned adjacent to the first sensor portion (98) and not the second sensor portion (98) when the tray (24') is in the first position, and wherein the tray (24') is configured to be positioned adjacent to the second sensor portion (98) and not the first sensor portion (98) when the tray (24') is in the second position.

13. The system of any one of claims 1-7 or 10-12 wherein:
the frame (12) has a stocking side (18) and a retrieval side (16), the passageway (14) extending from the stocking side (18) to the retrieval side (16) and configured to receive an item (33) therein;
wherein the system further includes an access control system configured to control access to the passageway (14); and
a controller (30) operatively connected to the access control system, wherein the sensor system (90) is operatively connected to the controller (30).

14. The system of any one of claims 1, 3-6 or 10-12 wherein the tray (24') is pivotable between the first position when no items are positioned on the tray (24') and the second position when an item or items (33) of sufficient predetermined weight are positioned on the tray (24'); and wherein the system further includes:
a door (35) coupled to said frame (12), wherein said door (35) is movable between a first position where said door (35) generally blocks access to at least one end of said passageway (14) and a second position where said door (35) does not generally block access to said at least one end of said passageway (14); and
a controller (30) operatively coupled to said door (35) and configured to retain said door (35) in said first position unless the controller (30) determines that an approved transaction has occurred or unless the controller (30) receives information that an approved transaction has occurred.

## Patentansprüche

1. Ein Auftragsabwicklungssystem umfassend:
einen Rahmen (12), der einen Durchlass (14) definiert;
einen Einsatz (24'), der in dem Durchlass (14) positioniert ist und um eine sich im Allgemeinen horizontal erstreckende Achse zwischen einer ersten Position und einer zweiten Position geschwenkt werden kann; und
ein Sensorsystem (90), das eingerichtet ist, die Position des Einsatzes (24') zu erfassen, wobei der Durchlass (14) eine kontinuierliche Öffnung ist, die sich durch den Rahmen (12) erstreckt und an seinem ersten Ende eine erste Öffnung auf einer ersten Seite des Rahmens (12) aufweist und an seinem zweiten, gegenüberliegenden Ende auf einer zweiten Seite des Rahmens (12) eine zweite Öffnung aufweist, wobei das System derart eingerichtet ist, dass ein auszugebender Artikel (33) in einer ersten Richtung durch die erste Öffnung in den Durchlass (14) und auf den Einsatz (24') eingeführt werden kann und danach in der ersten Richtung durch die zweite Öffnung aus dem Durchlass (14) entfernt werden kann, **dadurch gekennzeichnet, dass** das Sensorsystem (90) einen elektronischen Sensor (96) enthält, der eingerichtet ist, die Position des Einsatzes (24') zu erfassen und eine Ausgabe bereitzustellen.

2. Das System nach Anspruch 1, wobei der Einsatz (24') zwischen der ersten Position, wenn keine Artikel (33) auf dem Einsatz (24') positioniert sind, und der zweiten Position, wenn ein Artikel oder Artikel (33) mit einem ausreichenden vorgegebenen Gewicht auf dem Einsatz (24') positioniert sind, geschwenkt werden kann.

3. Das System nach einem vorhergehenden Anspruch, wobei der Einsatz (24') derart eingerichtet ist, dass dann, wenn sich der Einsatz (24') in der ersten Position befindet, der Einsatz (24') relativ zu einem horizontalen Referenzrahmen unter einem ersten Winkel geneigt ist, und dann, wenn sich der Einsatz (24') in der zweiten Position befindet, der Einsatz (24') relativ zu dem horizontalen Referenzrahmen unter einem zweiten Winkel, der sich von dem ersten Winkel unterscheidet, geneigt ist.

4. Das System nach einem vorhergehenden Anspruch, wobei der Einsatz (24') derart eingerichtet ist, dass dann, wenn sich der Einsatz (24') in der ersten Position befindet, der Einsatz (24') von einer Vorderseite des Rahmens (12) abgewinkelt ist, und dann, wenn sich der Einsatz (24') in der zweiten Position befindet, der Einsatz (24') von der Vorderseite des Rahmens (12) nicht abgewinkelt ist.

5. Das System nach einem vorhergehenden Anspruch, wobei der Durchlass im Allgemeinen horizontal ausgerichtet ist.

6. Das System nach einem vorhergehenden Anspruch, wobei der Rahmen (12) eine Vielzahl von Durchgängen (14) definiert und jeder Durchlass (14) einen schwenkbaren Einsatz (24') enthält, der darin positioniert ist, und wobei das Sensorsystem (90) konfiguriert ist, die Position jedes Einsatzes (24') zu erfassen.

7. Das System nach einem vorhergehenden Anspruch, das ferner eine Tür (35) umfasst, die an den Rahmen (12) gekoppelt ist, wobei die Tür (35) zwischen einer ersten Position, in der die Tür im Allgemeinen den Zugang zu mindestens einem Ende des Durchlasses (14) blockiert, und einer zweiten Position, in der die Tür (35) im Allgemeinen den Zugang zu dem Ende des Durchlasses nicht blockiert, bewegt werden kann.

8. Das System nach einem vorhergehenden Anspruch, das ferner eine Steuereinrichtung (30) in Form eines Prozessors, einer CPU, eines Computers oder ähnliches umfasst, die an das Sensorsystem (90) betriebstechnisch gekoppelt ist und eingerichtet ist, zu bestimmen, ob ein Artikel oder Artikel (33) eines ausreichenden vorgegebenen Gewichts auf dem Einsatz (24') positioniert sind.

9. Das System nach Anspruch 8, außer wenn abhängig von Anspruch 7, das ferner eine Tür (35) umfasst, die an den Rahmen (12) gekoppelt ist, wobei die Tür (35) zwischen einer ersten Position, in der die Tür (35) im Allgemeinen den Zugang zu mindestens einem Ende des Durchlasses (14) blockiert, und einer zweiten Position, in der die Tür (35) im Allgemeinen den Zugang zu dem mindestens einen Ende des Durchlasses (14) nicht blockiert, bewegt werden kann, und wobei die Steuereinrichtung (30) betriebstechnisch an die Tür (35) gekoppelt ist, um die Tür (35) in der ersten Position zu verriegeln oder zu entriegeln, und wobei die Steuereinrichtung (30) eingerichtet ist, die Tür (35) in einem verriegelten Zustand zu halten, bis die Steuereinrichtung (30) bestimmt, dass eine genehmigte Transaktion stattgefunden hat oder bis die Steuereinrichtung (30) Informationen empfängt, dass eine genehmigte Transaktion stattgefunden hat, wonach die Steuereinrichtung (30) eingerichtet ist, die Tür (35) zu entriegeln.

10. Das System nach einem vorhergehenden Anspruch, wobei der elektronische Sensor (96) ein Paar von Sensorabschnitten (98) enthält, wobei der erste Sensorabschnitt (98) eingerichtet ist, zu detektieren, wenn sich der Einsatz (24') in der ersten Position befindet, und wobei der zweite Sensorabschnitt (98) konfiguriert ist, zu detektieren, wenn sich der Einsatz (24') in der zweiten Position befindet.

11. Das System nach Anspruch 10, wobei der erste (98) und der zweite (98) Sensorabschnitt vertikal voneinander beabstandet sind.

12. Das System nach einem der Ansprüche 1-9, wobei der elektronische Sensor (96) ein Paar von Sensorabschnitten (98) enthält, wobei der Einsatz (24') eingerichtet ist, neben dem ersten Sensorabschnitt (98) und nicht dem zweiten Sensorabschnitt (98) positioniert zu werden, wenn sich der Einsatz (24') in der ersten Position befindet, und wobei der Einsatz (24') eingerichtet ist, neben dem zweiten Sensorabschnitt (98) und nicht dem ersten Sensorabschnitt (98) positioniert zu werden, wenn sich der Einsatz (24') in der zweiten Position befindet.

13. Das System nach einem der Ansprüche 1-7 oder 10-12, wobei:
der Rahmen (12) eine Lagerseite (18) und eine Entnahmeseite (16) aufweist, wobei sich der Durchlass (14) von der Lagerseite (18) zu der Entnahmeseite (16) erstreckt und konfiguriert ist, einen Artikel (33) darin zu aufzunehmen;
wobei das System ferner ein Zugangssteuerungssystem enthält, das eingerichtet ist, den Zugang zu dem Durchlass (14) zu steuern; und
eine Steuereinrichtung (30), die mit dem Zugangssteuerungssystem betriebstechnisch verbunden ist, wobei das Sensorsystem (90) mit der Steuereinrichtung (30) betriebstechnisch verbunden ist.

14. Das System nach einem der Ansprüche 1, 3-6 oder 10-12, wobei der Einsatz (24') zwischen der ersten Position, wenn keine Artikel auf dem Einsatz (24') positioniert sind, und der zweiten Position, wenn ein oder mehrere Artikel (33) mit ausreichendem vorgegebenen Gewicht auf dem Einsatz (24') positioniert sind, geschwenkt werden kann; und wobei das System ferner Folgendes umfasst:
eine Tür (35), die an den Rahmen (12) gekoppelt ist, wobei die Tür (35) zwischen einer ersten Position, in der die Tür (35) im Allgemeinen den Zugang zu mindestens einem Ende des Durchlasses (14) blockiert, und einer zweiten Position, in der die Tür (35) im Allgemeinen den Zugang zu dem mindestens einen Ende des Durchlasses (14) nicht blockiert, bewegt werden kann; und
eine Steuereinrichtung (30), die an die Tür (35) betriebstechnisch gekoppelt ist und eingerichtet ist, die Tür (35) in der ersten Position zu halten, bis die Steuereinrichtung (30) bestimmt, dass eine genehmigte Transaktion stattgefunden hat, oder bis die Steuereinrichtung (30) Informationen empfängt, dass eine genehmigte Transaktion stattgefunden hat.

## Revendications

1. Système d'exécution de commandes comprenant :
un cadre (12) définissant un passage (14) ;
un plateau (24') positionné dans le passage (14) et pouvant pivoter autour d'un axe s'étendant généralement horizontalement entre une première position et une seconde position ; et
un système de capteur (90) configuré pour détecter la position du plateau (24'),
dans lequel ledit passage (14) est une ouverture continue s'étendant à travers ledit cadre (12) et comporte une première ouverture à une première extrémité de celui-ci sur un premier côté dudit cadre (12) et une seconde ouverture à une seconde extrémité opposée de celui-ci sur un second côté dudit cadre (12), et dans lequel le système est configuré de telle sorte qu'un article (33) à distribuer peut être inséré dans le passage (14) et sur le plateau (24') dans une première direction à travers la première ouverture, et peut ensuite être retiré du passage (14) dans la première direction à travers la seconde ouverture, **caractérisé en ce que** le système de capteur (90) comprend un capteur électronique (96) configuré pour détecter la position du plateau (24') et pour fournir une sortie.

2. Système selon la revendication 1, dans lequel le plateau (24') peut pivoter entre la première position lorsqu'aucun article (33) n'est placé sur le plateau (24') et la seconde position lorsqu'un ou plusieurs articles (33) d'un poids prédéterminé suffisant sont placés sur le plateau (24').

3. Système selon l'une quelconque des revendications précédentes, dans lequel le plateau (24') est configuré de telle sorte que lorsque le plateau (24') est dans la première position, le plateau (24') est incliné par rapport à un référentiel horizontal selon un premier angle et lorsqu'il est dans la seconde position, le plateau (24') est incliné par rapport au référentiel horizontal selon un second angle qui est différent dudit premier angle.

4. Système selon l'une quelconque des revendications précédentes, dans lequel le plateau (24') est configuré de telle sorte que lorsque le plateau (24') est dans la première position, le plateau (24') est incliné à l'opposé d'un avant du cadre (12) et lorsqu'il est dans la seconde position, le plateau (24') n'est pas incliné à l'opposé de l'avant du cadre (12).

5. Système selon l'une quelconque des revendications précédentes, dans lequel ledit passage est orienté généralement horizontalement.

6. Système selon l'une quelconque des revendications précédentes, dans lequel le cadre (12) définit une pluralité de passages (14) et chaque passage (14) comprend un plateau pivotant (24') positionné à l'intérieur, et dans lequel le système de capteur (90) est configuré pour détecter la position de chaque plateau (24'.

7. Système selon l'une quelconque des revendications précédentes, comprenant en outre une porte (35) couplée audit cadre (12), ladite porte (35) étant mobile entre une première position dans laquelle ladite porte (35) bloque généralement l'accès à au moins une extrémité dudit passage (14) et une seconde position dans laquelle ladite porte (35) ne bloque généralement pas l'accès à ladite extrémité dudit passage (14).

8. Système selon l'une quelconque des revendications précédentes, comprenant en outre un contrôleur (30) sous la forme d'un processeur, d'une unité centrale, d'un ordinateur ou similaire couplé de manière opérationnelle audit système de capteur (90) et configuré pour déterminer si un ou des articles (33) d'un poids prédéterminé suffisant sont positionnés sur le plateau (24').

9. Système selon la revendication 8, sauf lorsqu'il dépend de la revendication 7, comprenant en outre une porte (35) couplée audit cadre (12), dans lequel ladite porte (35) est mobile entre une première position dans laquelle ladite porte (35) bloque généralement l'accès à au moins une extrémité dudit passage (14) et une seconde position dans laquelle ladite porte (35) ne bloque généralement pas l'accès à ladite au moins une extrémité dudit passage (14), et dans lequel ledit contrôleur (30) est couplé de manière opérationnelle à ladite porte (35) pour verrouiller ou déverrouiller ladite porte (35) dans ladite première position, et dans lequel le contrôleur (30) est configuré pour maintenir ladite porte (35) dans un état verrouillé à moins que le contrôleur (30) détermine qu'une transaction approuvée a eu lieu ou à moins que le contrôleur (30) reçoive des informations selon lesquelles une transaction approuvée a eu lieu, après quoi le contrôleur (30) est configuré pour déverrouiller ladite porte (35).

10. Système selon l'une quelconque des revendications précédentes, dans lequel le capteur électronique (96) comprend
une paire de parties de capteur (98), dans lequel la première partie de capteur (98) est configurée pour détecter lorsque le plateau (24') est dans la première position, et dans lequel la seconde partie de capteur (98) est configurée pour détecter lorsque le plateau (24') est dans la seconde position.

11. Système selon la revendication 10, dans lequel les première (98) et seconde (98) parties de capteur sont espacées verticalement.

12. Système selon l'une quelconque des revendications 1 à 9, dans lequel le capteur électronique (96) comprend une paire de parties de capteur (98), dans lequel le plateau (24') est configuré pour être positionné adjacent à la première partie de capteur (98) et non à la seconde partie de capteur (98) lorsque le plateau (24') est dans la première position, et dans lequel le plateau (24') est configuré pour être positionné adjacent à la seconde partie de capteur (98) et non à la première partie de capteur (98) lorsque le plateau (24') est dans la seconde position.

13. Système selon l'une quelconque des revendications 1 à 7 ou 10 à 12, dans lequel :
le cadre (12) a un côté de stockage (18) et un côté de récupération (16), le passage (14) s'étendant du côté de stockage (18) au côté de récupération (16) et configuré pour recevoir un article (33) à l'intérieur ;
dans lequel le système comprend en outre un système de contrôle d'accès configuré pour contrôler l'accès au passage (14) ; et
un contrôleur (30) connecté de manière opérationnelle au système de contrôle d'accès, le système de capteur (90) étant connecté de manière opérationnelle au contrôleur (30).

14. Système selon l'une quelconque des revendications 1, 3 à 6 ou 10 à 12, dans lequel le plateau (24') peut pivoter entre la première position lorsqu'aucun article n'est positionné sur le plateau (24') et la seconde position lorsqu'un ou plusieurs articles (33) d'un poids prédéterminé suffisant sont positionnés sur le plateau (24') ; et dans lequel le système comprend en outre :
une porte (35) couplée audit cadre (12), ladite porte (35) étant mobile entre une première position dans laquelle ladite porte (35) bloque généralement l'accès à au moins une extrémité dudit passage (14) et une seconde position dans laquelle ladite porte (35) ne bloque généralement pas l'accès à ladite au moins une extrémité dudit passage (14) ; et
un contrôleur (30) couplé de manière opérationnelle à ladite porte (35) et configuré pour retenir ladite porte (35) dans ladite première position à moins que le contrôleur (30) détermine qu'une transaction approuvée a eu lieu ou à moins que le contrôleur (30) reçoive des informations selon lesquelles une transaction approuvée a eu lieu.
